# FASCICULE DE BREVET EUROPEEN

(11) **EP 1 163 561 B1**
(45) Date de publication et mention de la délivrance du brevet: **20.08.2003**
(21) Numéro de dépôt: 00906423.9
(22) Date de dépôt: 17.02.2000
(51) Int. Cl.: G06F 1/00

(54) **PROCEDE POUR CREER UN LIEN ENTRE UN EDITEUR ET DES UTILISATEURS**
VERFAHREN ZUR ERZEUGUNG EINER VERBINDUNG ZWISCHEN EINEM HERAUSGEBER UND BENUTZERN
METHOD FOR GENERATING A LINK BETWEEN AN EDITING PROGRAMME AND USERS

(30) Priorité: 17.02.1999 FR 9902139
(43) Date de publication de la demande: 19.12.2001
(73) Titulaire: Netquartz, 78190 Trappes (FR)
(72) Inventeur: PAVLIN, Dominique, F-78180 Montigny le Bretonneux (FR); WALLACE, Iain, F-75004 Paris (FR); LEVAVASSEUR, Bertrand, F-75018 Paris (FR); BOUILHOL, Christophe, F-78400 Chatou (FR)
(74) Mandataire: Fruchard, Guy
(86) Numéro de dépôt international: FR0000406
(87) Numéro de publication internationale: WO00049483

(56) Documents cités:
- WO-A-96/41449
- US-A- 5 103 476
- US-A- 5 553 242
- US-A- 5 699 512

## Description

La présente invention concerne un procédé pour créer un lien entre les utilisateurs et un éditeur d'entités numérisées (notamment un éditeur de logiciels, de fichiers, de compacts disques, de vidéodisques, etc...) reproductibles par des moyens informatiques et/ou électroniques ; lesdites entités numérisée étant initialement conçues pour être utilisées ou exécutées uniquement sur l'équipement informatique d'un utilisateur.

Au sens de la présente invention, un "lien" entre les utilisateurs et un éditeur est un lien qui permet de constituer pendant une longue période de temps, si ce n'est en permanence, une communauté d'utilisateurs échangeant des informations entre eux et/ou avec l'éditeur.

Ce lien permet également d'assurer la protection du logiciel contre les tentatives de fraudes de ceux qui voudraient l'utiliser alors qu'ils ne disposent pas des droits d'utilisation concédés par l'éditeur.

Il est connu des procédés et des systèmes permettant à un éditeur de contrôler l'utilisation d'un logiciel par un utilisateur. A cet effet, une partie essentielle du logiciel n'est transférée à l'utilisateur qu'après que celui-ci se soit régulièrement enregistré auprès du fournisseur du logiciel. L'utilisateur peut également ainsi vérifier l'intérêt que ce logiciel présente pour lui, avant de l'acquérir. Le document US 5 103 476 (WAITE DAVID P ET AL) du 7 avril 1992 décrit un tel procédé et un tel système. Toutefois, la partie non transférée n'est pas utilisée pour créer un "lien" fonctionnel avec l'autre partie. Elle est utilisée pour contraindre l'utilisateur à régulariser sa situation de licencié, en forçant l'enregistrement de ce dernier auprès du gestionnaire des droits. Après enregistrement, la partie manquante du logiciel est transférée au licencié. La notion "lien", au sens de la présente invention, est donc étrangère au document WAITE DAVID P ET AL.

De plus, le système de protection du logiciel décrit dans le document WAITE DAVID P ET AL repose sur un principe de clé de chiffrement. Le code de la partie manquante est chiffré. Ce code doit être déchiffré pour être exécuté localement, après transfert au licencié. La partie chiffrée du code devient vulnérable au moment de son exécution. En effet, il suffit de sauvegarder l'image mémoire du code déchiffré pour pouvoir l'utiliser librement sur d'autres équipements informatiques. Par ailleurs, comme les droits des utilisateurs sont centralisés au niveau du serveur, il suffit de modifier les paramètres sur le serveur pour modifier les droits d'un utilisateur.

Il est également connu des logiciels permettant d'exécuter des fonctions distantes et de faire fonctionner un logiciel en mode client/serveur. Le document US 5 553 242 (RUSSELL EDWARD ET AL) du 3 septembre 1996 décrit un tel système client/serveur. De tels systèmes client/serveur ne sont pas conçus pour créer des "liens" quasi permanents au sens de la présente invention. De plus, de tels systèmes ne s'appliquent pas à des applications logicielles déjà constituées, produites par des éditeurs de logiciels. Les logiciels faisant l'objet du système décrit par RUSSELL EDWARD ET AL sont directement conçus en deux parties : l'une destinée au poste serveur, l'autre destinée au poste client.

Le procédé selon l'invention a pour objet de créer un "lien" entre au moins un utilisateur et un éditeur et/ou un distributeur d'entités numérisées (notamment des logiciels, des fichiers, des compacts disques, des vidéodisques, etc...) reproductibles par des moyens informatiques et/ou électroniques. Lesdites entités numérisées ont été initialement conçues pour être utilisées ou exécutées uniquement sur un équipement informatique d'un utilisateur.

Le procédé selon l'invention est défini dans la revendication 1 et comprend les étapes suivantes :
- l'étape de subdiviser ladite entité numérisée en deux parties, une première et une deuxième partie, dont aucune ne peut être exploitée sans l'autre,
- l'étape de mémoriser ladite première partie dans une zone mémoire d'un serveur connecté à un réseau informatique,
- l'étape de transmettre ladite deuxième partie à au moins un utilisateur disposant d'un équipement informatique comportant des moyens informatiques pour mettre en oeuvre ladite deuxième partie,
- l'étape d'installer ladite deuxième partie sur ledit équipement informatique,
- l'étape de connecter ledit équipement informatique audit réseau informatique,
- l'étape d'établir un lien fonctionnel entre ladite première partie et ladite deuxième partie.

Lors de la mise en service de ladite deuxième partie, celle-ci se connecte automatiquement, via le réseau informatique, audit serveur pour exécuter ladite première partie manquante mémorisée dans ledit serveur.

Si l'on compare le procédé selon l'invention au procédé de protection de logiciel grâce à une clé de déchiffrement, ou à tout autre procédé de contrôle au niveau du système client, tel que celui décrit dans le document WAITE DAVID P ET AL, on constate une faiblesse commune à tous les systèmes connus : le système de déblocage de la sécurité est toujours accessible au niveau du logiciel client. Dans le cas de l'invention, la sécurité du système ne peut être compromise en examinant le code de l'application. En effet, les contrôles sont effectués par un serveur distant et le client se contente de faire des requêtes d'exécution qui sont effectuées ou non, en fonction de la décision du serveur. A aucun moment, dans le cas de l'invention, l'ensemble du logiciel n'est présent sur le site client.

Selon l'invention, on subdivise en deux parties un logiciel déjà constitué, en mettant en oeuvre un processus de subdivision automatique qui permet de ne déporter que quelques instructions assembleurs. On profite ainsi, par rapport au système décrit par RUSSEL EDWARD ET AL, des avantages de sécurité et de contrôle propres à une application déjà constituée initialement conçue pour fonctionner uniquement sur un poste client.

Le document RUSSELL EDWARD ET AL décrit une liaison créée par une méthode d'exécution de fonction sur un serveur distant mais ce document ne suggère pas que cette liaison puisse être créée :
- en procédant à une subdivision automatique du code d'un logiciel applicatif, puis
- en créant un "lien fonctionnel" entre les deux parties de ce logiciel.

De préférence, le procédé selon l'invention comprend en outre l'étape d'échanger des informations, en relation avec ladite entité numérisée, au moyen dudit lien fonctionnel. Ainsi, une communauté d'utilisateurs échangeant des informations est créée.

De préférence également, le procédé selon l'invention comprend en outre l'étape de contrôler l'accès audit serveur. Ainsi, un utilisateur ne peut accéder à ladite première partie et exploiter ladite entité numérisée que s'il possède les droits d'accès.

Avantageusement, le procédé selon l'invention comprend en outre l'étape de contrôler et de limiter l'accès audit serveur pendant une période de temps limitée et/ou pour un nombre d'utilisations limité et/ou pour une population d'utilisateurs agréés. Ainsi, l'utilisateur ne peut exploiter ladite entité numérisée dans son intégralité que pendant une phase d'évaluation et/ou toute phase convenue avec l'éditeur.

Avantageusement également, le procédé selon l'inventio comprend en outre
- l'étape d'identifier l'utilisateur lorsqu'il se connecte audit serveur,
- l'étape de mémoriser des identifiants spécifiques audit utilisateur.

Ainsi, l'éditeur de ladite entité numérisée peut référencer les clients, notamment les clients potentiels de ladite entité numérisée.

Le procédé selon l'invention comprend en outre l'étape d'analyser les événements liés à l'exploitation de ladite entité numérisée, notamment la succession des incidents lors de l'installation, la fréquence d'utilisation d'une fonction de ladite entité numérisée, la fréquence d'utilisation de ladite entité numérisée pendant une phase d'évaluation. Ainsi, l'éditeur dispose d'un panel d'utilisateurs qui peuvent coopérer au test de l'entité numérisée. De sorte que l'éditeur de ladite entité numérisée peut déterminer le degré de satisfaction des clients, notamment des clients potentiels.

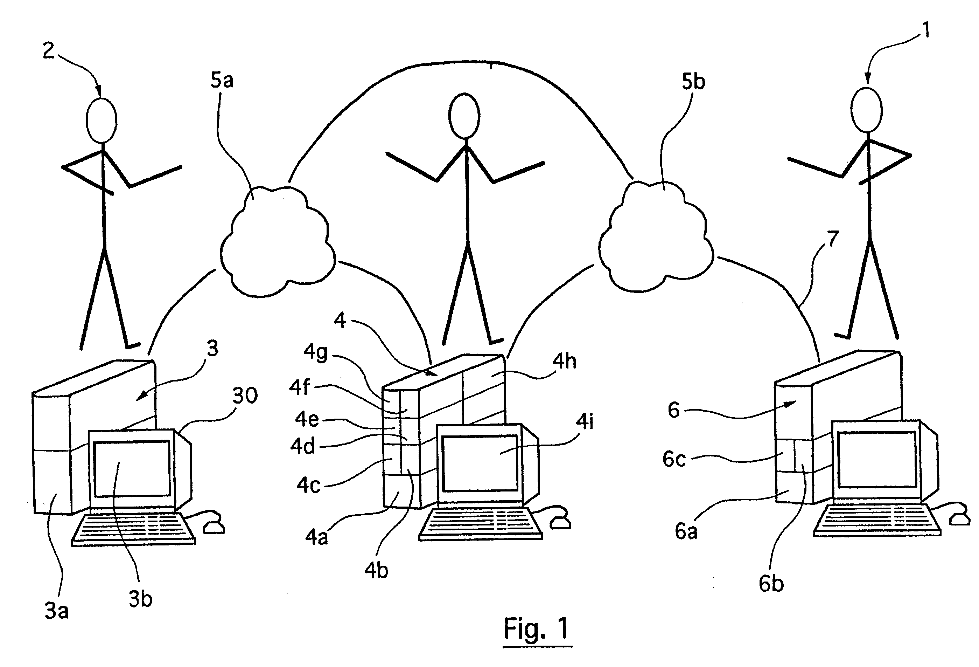

D'autres caractéristiques et avantages de l'invention apparaîtront à la lecture de la description de variantes de réalisation de l'invention, données à titre d'exemple indicatif et non limitatif, et de la figure 1 qui représente une vue en perspective d'une variante de réalisation d'un système selon l'invention.

### Paragraphe introductif

Le procédé et le système selon l'invention, fonctionnent sous Windows 95, 98 et Windows NT. Ils permettent aux éditeurs 2 et/ou aux distributeurs de logiciels de créer un lien du type "marketing face-à-face" ou encore en langue anglaise : "one-to-one marketing" avec leurs utilisateurs 1, 6, au travers d'un réseau de communication informatique 5a, 5b tel que le réseau Internet. Ce lien permet de contrôler 4e efficacement les autorisations d'utilisation du logiciel et d'instaurer une communication permanente entre un éditeur 2 et chacun des utilisateurs 1 de ses produits pour améliorer la qualité et la pertinence des démarches commerciales et de support technique.

Chaque utilisateur 1 d'un produit "lié", est enregistré 4g sur un serveur 4 contrôlé par l'éditeur 2. Ses droits d'accès au produit sont enregistrés dans une base de données 4b que l'éditeur maintient directement. Chaque utilisateur dispose d'un compte personnel d'accès pour chaque produit qu'il utilise.

### I. Le SAA (Segmentation Asymétrique d'Application), ou encore en langue anglaise : Asymetric Application Segmentation : AAS.

Le SAA comporte des moyens informatiques 3 pour subdiviser un produit en deux parties, dont aucune ne peut être exploitée sans l'autre.

On va maintenant décrire comment le SAA permet à un éditeur de transformer une application déjà conçue de telle sorte qu'elle bénéficie des avantages et des fonctionnalités apportées par le lien Internet. Le lien établie par SAA peut être apparenté à la transformation automatique d'une application résidant sur un poste de travail isolé en une application fonctionnant en mode client/serveur.

Cette transformation est effectuée grâce à un logiciel spécifique. Ce logiciel spécifique sera ci-après appelé :Editeur de Stratégie. Il fait partie d'un ensemble d'outils logiciels.

L'Editeur de Stratégie effectue la transformation en plusieurs phases :
1. Dans une application déjà conçue, se présentant sous la forme d'un fichier exécutable au format WIN32 (.EXE, .DLL,...), l'Editeur de Stratégie détecte la section de code intégrée au fichier exécutable. A cet effet, il procède à l'analyse de l'en-tête P.E (Portable Executable Format). Il détecte ainsi la zone de code Assembleur
2. L'Editeur de Stratégie procède ensuite au désassemblage du code en instruction assembleur Intel.
3. On procède en suite à la sélection d'une zone de code à déporter sur le serveur. Cette sélection peut être faite automatiquement ou manuellement par l'utilisateur de l'Editeur de Stratégie.
4. La zone de code ainsi sélectionnée est stockée par l'Editeur de Stratégie sur le serveur. L'Editeur de Stratégie procède au remplacement dans le nouveau fichier exécutable de cette zone de code par un nouveau code. Ce nouveau code sera ci-après appelé : Hook Code.
5. Puis, l'Editeur de Stratégie procède à l'enregistrement du nouveau fichier exécutable

Le Hook Code est une série d'instructions assembleur permettant de charger une librairie dynamique intitulée : el32.d11 dans l'espace d'exécution de l'application.

Il est ainsi possible d'adjoindre à l'application les fonctionnalités ci-après décrite notamment dans le chapitre II. CME (Canal Marketing Electronique).

Le code de démarrage de cette librairie est automatiquement exécuté lors du chargement de l'application. En conséquence, à chaque fois que la nouvelle application se déroule, elle exécute le Hook Code à la place du code d'origine ce qui a pour conséquence de lancer les fonctions d'initialisation de la librairie el32.dll. Cette librairie permet d'afficher divers écrans aux moyens des équipements informatiques du poste client 6
et d'initialiser une séquence d'exécution répartie entre le code client du poste client 6 et le code serveur situé sur le serveur 4. Ces écrans ont pour objectif d'informer l'utilisateur de la présence du SAA et d'afficher les informations légales. Ils ont également pour objectif de permettre la saisie d'information à partir de grilles de saisies ou de pages.

Le système selon l'invention permet d'exécuter le code serveur non pas comme un code Intel normal mais en tant que code interprété. A cet effet, le serveur dispose d'un Interpréteur assembleur Intel. Cette technique permet d'exécuter n'importe quel code assembleur et d'instaurer un dialogue entre le client et le serveur. Ainsi, le serveur peut à tout moment récupérer des données qu'il ne détient pas en interrogeant le client.

Le SAA permet de transformer une application destinée à fonctionner sur un poste client 6 en une nouvelle application dont le code se trouve réparti entre le poste client 6 (deuxième partie de l'application) et la zone mémoire 4a d'un serveur distant 4 (deuxième partie de l'application). Des moyens d'installation 6a permettent d'installer la deuxième partie de l'application sur ledit poste 6. L'intérêt de ce procédé est de sécuriser le logiciel et d'en maîtriser les droits d'accès. En particulier, chaque prospect peut essayer rapidement la même application que celle utilisée par un client sans que l'éditeur n'encoure le moindre risque de piratage.

En effet, un logiciel ne peut être piraté par un utilisateur si celui-ci ne détient pas la totalité du code. D'autre part, l'obligation absolue de connexion au serveur distant 4 pour lancer le programme rend le contrôle des droits aussi simple que les contrôles d'accès à des données.

La figure 1 illustre le fonctionnement d'un produit édité par un éditeur 2, réparti entre le poste client 6 d'un utilisateur 1 et un serveur 7. Le procédé SAA permet d'appliquer ce mode de fonctionnement à n'importe quel produit (notamment des logiciels, des fichiers, des compacts disques, des vidéodisques, etc...).

### II. CME (Canal Marketing Electronique), ou encore en langue anglaise : Online Marketing Channel, OMC.

Un logiciel transformé par le procédé SAA établit automatiquement une connexion 7, 5b avec le serveur distant 4 lorsqu'il s'exécute. Des moyens informatiques 6b, 4d, respectivement situés dans le poste 6 et le serveur 4 permettent d'établir un tel lien fonctionnel. Cette caractéristique rend possible le dialogue entre l'éditeur 2 et ses utilisateurs 1.

Quand l'utilisateur lance l'application, elle se connecte automatiquement à Internet 5b pour exécuter la partie du code manquante sur le serveur distant 4 de l'éditeur. Ainsi notamment, un prospect, pour faire fonctionner une version d'évaluation, doit disposer d'un accès à Internet. Chaque fois qu'il utilise une version générée par l'invention, il crée automatiquement un lien entre lui-même et l'éditeur de logiciels.

Ce mode de communication est appelé CME. Il permet de transmettre une information pertinente à chaque utilisateur 1 d'un produit au moment où elle présente le plus d'intérêt. En effet, c'est lorsque le produit est utilisé qu'une information technique ou commerciale aura le plus d'impact. Par exemple, un prospect 1 sera plus sensible à une "stimulation commerciale" si elle lui parvient juste au moment où il lance le logiciel.

Bien souvent, un utilisateur 1, qui ne parvient pas à faire fonctionner un logiciel convenablement, cherche longuement où s'adresser pour obtenir un support. Là encore le CME est le moyen pour lui de communiquer directement avec le service concerné. Il n'aura pas besoin de justifier d'un numéro de licence ou d'un historique des communications qu'il a déjà eues avec le support technique puisque le seul fait de se connecter au serveur 4 l'identifie automatiquement. Ainsi, il économise du temps et ne dépense plus d'argent en téléphone à joindre le service compétent.

Lorsque le service de support dépend d'un contrat payant, ou pour que l'éditeur s'assure de fournir le support qu'il souhaite à chaque catégorie d'utilisateurs utilisant légalement son produit, le CME offre une solution élégante pour fournir l'information pertinente à un moindre coût.

Le procédé et le système selon l'invention intègre le CME au coeur d'une application existante. L'application ainsi transformée dispose de moyens supplémentaires permettant notamment d'envoyer et de recevoir des messages provenant des différents services de l'éditeur 2 (support, marketing produit, vente...). Il permet par ailleurs à l'éditeur d'émettre des messages qui seront affichés automatiquement au démarrage du programme, ces messages étant destinés à un groupe d'utilisateurs ou à une personne en particulier. Ces messages peuvent être générés par un événement particulier (première connexion au serveur) ou être issus d'une décision réfléchie d'un intervenant de l'éditeur. A terme, le CME est un véhicule idéal pour les mises à jour de logiciels ou des fichiers chez les utilisateurs des produits.

### Générateur automatique de lien

Le procédé et le système selon l'invention disposent d'un générateur automatique pour ajouter un lien en intégrant le SAA et le CME au sein d'une application.

La sélection des paramètres de génération (Application, paramétrages des critères de distribution tels que la durée de fonctionnement de l'application, les personnes autorisées à utiliser le produit, ...) est assistée par plusieurs suites d'écrans menant logiquement au processus de sélection.

La génération proprement dite consiste à décompiler le code de l'application pour en extraire certaines suites d'instructions qui seront écartées du code l'application et stockée sur le serveur. Ces instructions sont ensuite remplacées durant une phase d'injection par un nouveau code dont le principal rôle est de greffer une librairie d'extension au sein de l'application ainsi transformée. Cette librairie d'extension fournit l'ensemble des services de connexion aux serveurs et assure l'affichage des différents écrans et messages.

Le générateur transforme automatiquement une application (win 32/Intel) en version exploitable.

L'éditeur des droits d'utilisation (ou encore, en langue anglaise, le "tracker") permet de visualiser 3b, 4i les utilisateurs des produits et d'agir sur leurs droits d'accès en temps réel.

### Visualisation des utilisateurs 1 et des prospects 1 utilisant des produits.

En particulier, l'éditeur 2 peut désormais automatiquement référencer avec fiabilité tous les utilisateurs 1 de sa version de démonstration. L'éditeur obtient des coordonnées fiables de chaque prospect (nom, société, tel, mel ...). En effet, l'éditeur peut prévenir tout prospect qui s'enregistre que ses droits d'accès seraient immédiatement supprimés si ses coordonnées se révélaient inexactes.

L'éditeur peut savoir avec quelle fréquence les utilisateurs, et notamment les prospects, utilisent leur version de démonstration. A cet effet, le poste informatique 30 de l'éditeur 2 et/ou le serveur distant 4 comprennent des moyens informatiques 3a d'analyse pour analyser les événements liés à l'exploitation de l'application. Ainsi, l'éditeur connaît avec précision, en temps réel et pour chaque prospect, la fréquence d'utilisation de la version d'évaluation. Il peut facilement en déduire le degré de motivation et donc orienter son effort commercial sur les prospects les plus "chauds". Des rapports standards permettent à l'éditeur de visualiser 3b, 4i en temps réel les informations collectées dans la base de données 4g du serveur.

**Contrôle en temps réel des droits d'accès des utilisateurs et des prospects.**

L'éditeur peut étendre les droits d'exécution de tout prospect, à distance, en un instant. Et il peut même transformer la version de démonstration d'un prospect en une version cliente en quelques secondes via Internet.

Les droits d'accès étant gérés par le serveur 4 de l'éditeur 2, celui-ci peut facilement les modifier pour répondre aux éventuelles demandes d'extension d'évaluation des utilisateurs 1. Il peut sélectivement étendre les droits de certains prospects, sans pour autant affecter les droits de l'ensemble des prospects.

### Réception et transmission de messages

L'éditeur de droits d'utilisation permet par ailleurs de consulter les messages du CME et d'envoyer des informations vers les utilisateurs des produits.

Le serveur 4 est installé en complément d'un serveur accessible sur Internet. Il dispose de moyens d'identification 4f qui lui permettent de contrôler les utilisateurs 1 des produits. Il tient à jour une base de données 4g des utilisateurs.

Chaque utilisateur 1 doit disposer d'une licence d'exploitation de l'application. L'administrateur du système peut librement attribuer des licences à un utilisateur dans la limite des droits qu'il possède et qui sont matérialisés par des jetons enregistrés dans une mémoire du serveur 4.

En particulier, la version d'évaluation ne peut être utilisée que si les droits d'accès du prospect sont valides. Définis par l'éditeur lors de la génération de la version d'évaluation, les droits d'accès de l'utilisateur sont automatiquement vérifiés lors de la connexion au serveur distant. Plusieurs types de limitation sont gérés par l'invention. Par exemple : une limitation en fonction du temps et une en fonction du nombre d'exécutions.

## Revendications

1. Procédé pour créer un lien entre au moins un utilisateur (1) et un éditeur (2) d'entités numérisées (notamment des logiciels, des fichiers, des compacts disques, des vidéodisques, etc...) reproductibles par des moyens informatiques et/ou électroniques ; lesdites entités numérisée ayant été initialement conçues pour être utilisées ou exécutées uniquement sur un équipement informatique d'un utilisateur,
ledit procédé comprenant les étapes suivantes :
- l'étape de subdiviser (3) ladite entité numérisée en deux parties, une première et une deuxième partie, dont aucune ne peut être exploitée sans l'autre,
- l'étape de mémoriser ladite première partie dans une zone mémoire (4a) d'un serveur (4) connecté à un réseau informatique (5a, 5b),
- l'étape de transmettre ladite deuxième partie à au moins un utilisateur (1) disposant d'un équipement informatique (6) comportant des moyens informatiques pour mettre en oeuvre ladite deuxième partie,
- l'étape d'installer (6a) ladite deuxième partie sur ledit équipement informatique (6),
- l'étape de connecter (7) ledit équipement informatique audit réseau informatique (5b),
- l'étape d'établir un lien fonctionnel entre ladite première partie et ladite deuxième partie, de sorte que, lors de la mise en service de ladite deuxième partie, celle-ci se connecte automatiquement, via le réseau informatique, audit serveur pour exécuter ladite première partie manquante mémorisée dans ledit serveur.

2. Procédé selon la revendication 1 tel qu'il comprend en outre
- l'étape d'échanger des informations, en relation avec ladite entité numérisée, au moyen dudit lien fonctionnel,
de sorte qu'une communauté d'utilisateurs échangeant des informations est ainsi créée.

3. Procédé selon l'une quelconque des revendications 1 ou 2 tel qu'il comprend en outre
- l'étape de contrôler (4e) l'accès audit serveur, de telle sorte qu'un utilisateur ne peut accéder à ladite première partie et exploiter ladite entité numérisée que s'il possède les droits d'accès.

4. Procédé selon la revendication 3 tel qu'il comprend en outre
- l'étape de contrôler et de limiter l'accès audit serveur pendant une période de temps limitée et/ou pour un nombre d'utilisations limité et/ou pour une population d'utilisateurs agréés,
de telle sorte que l'utilisateur ne peut exploiter ladite entité numérisée dans son intégralité que pendant une phase d'évaluation et/ou toute phase convenue avec l'éditeur.

5. Procédé selon l'une quelconque des revendications 1 à 4 tel qu'il comprend en outre
- l'étape d'identifier (4f) l'utilisateur lorsqu'il se connecte audit serveur,
- l'étape de mémoriser (4g) des identifiants spécifiques audit utilisateur,
de sorte que l'éditeur de ladite entité numérisée peut référencer les clients, notamment les clients potentiels de ladite entité numérisée.

6. Procédé selon l'une quelconque des revendications 1 à 5 tel qu'il comprend en outre
- l'étape d'analyser (3a) les événements liés à l'exploitation de ladite entité numérisée, notamment la succession des incidents lors de l'installation, la fréquence d'utilisation d'une fonction de ladite entité numérisée, la fréquence d'utilisation de ladite entité numérisée pendant une phase d'évaluation,
de sorte que l'éditeur dispose d'un panel d'utilisateurs qui peuvent coopérer au test de l'entité numérisée,
de sorte que l'éditeur de ladite entité numérisée peut déterminer le degré de satisfaction des clients, notamment des clients potentiels.

7. Procédé selon la revendication 6, **caractérisé en ce qu'**il comporte l'étape de déterminer le degré de satisfaction des utilisateurs.

## Patentansprüche

1. Verfahren zum Herstellen einer Verbindung zwischen mindestens einem Benutzer (1) und einem Herausgeber (2) digitalisierter Entitäten (insbesondere von Software, Dateien, CDs, Videoplatten, usw.), die durch Datenverarbeitungsmittel und/oder elektronische Mittel reproduzierbar sind, wobei die digitalisierten Entitäten anfänglich dafür ausgelegt worden sind, einzig und allein auf einer rechentechnischen Ausrüstung eines Benutzers verwendet bzw. ausgeführt zu werden,
wobei das Verfahren die folgenden Schritte umfaßt:
- den Schritt des Unterteilens (3) der digitalisierten Entität in zwei Teile, einen ersten und einen zweiten Teil, von denen keiner ohne den anderen genutzt werden kann,
- den Schritt des Speicherns des ersten Teils in einer Speicherzone (4a) eines Servers (4), der mit einem Rechnernetz (5a, 5b) verbunden ist,
- den Schritt des Übertragens des zweiten Teils an mindestens einen Benutzer (1), der über eine rechentechnische Ausrüstung (6) verfügt, die Datenverarbeitungsmittel umfaßt, um den zweiten Teil zu benutzen,
- den Schritt des Installierens (6a) des zweiten Teils auf der rechentechnischen Ausrüstung (6),
- den Schritt des Verbindens (7) der rechentechnischen Ausrüstung mit dem Rechnernetz (5b),
- den Schritt des Herstellens einer funktionellen Verbindung zwischen dem ersten Teil und dem zweiten Teil, derart, daß sich der zweite Teil bei seiner Inbetriebnahme automatisch über das Rechnemetz mit dem Server verbindet, um den fehlenden ersten Teil, der in dem Server gespeichert ist, auszuführen.

2. Verfahren nach Anspruch 1, ferner umfassend
- den Schritt des Austauschens von Informationen im Zusammenhang mit der digitalisierten Entität mit Hilfe der funktionellen Verbindung,
derart, daß infolgedessen eine Informationen austauschende Benutzergemeinschaft gebildet wird.

3. Verfahren nach einem der Ansprüche 1 oder 2, ferner umfassend
- den Schritt des Kontrollierens (4e) des Zugangs zu dem Server,
derart, daß ein Benutzer nur bei Besitz von Zugriffsrechten auf den ersten Teil zugreifen und die digitalisierte Entität nutzen kann.

4. Verfahren nach Anspruch 3, ferner umfassend
- den Schritt des Kontrollierens und Beschränkens des Zugangs zu dem Server auf einen begrenzten Zeitraum und/oder für eine begrenzte Benutzeranzahl und/oder für eine zugelassene Benutzergruppe,
derart, daß der Benutzer die digitalisierte Entität in ihrer Integralität nur während einer Auswertungsphase und/oder jeder mit dem Herausgeber vereinbarten Phase nutzen kann.

5. Verfahren nach einem der Ansprüche 1 bis 4, ferner umfassend
- den Schritt des Identifizierens (4f) des Benutzers während er sich mit dem Server verbindet,
- den Schritt des Speicherns (4g) der für den Benutzer spezifischen Identifizierungen,
derart, daß der Herausgeber der digitalisierten Entität die Kunden referenzieren kann, insbesondere die potentiellen Kunden der digitalisierten Entität.

6. Verfahren nach einem der Ansprüche 1 bis 5, ferner umfassend,
- den Schritt des Analysierens (3a) der Ereignisse, die mit der Nutzung der digitalisierten Entität verbunden sind, insbesondere der Folge von Störungen während der Installation, der Betriebsfrequenz einer Funktion der digitalisierten Entität, der Betriebsfrequenz der digitalisierten Entität während einer Auswertungsphase,
derart, daß der Herausgeber über ein Panel von Benutzern verfügt, die beim Test der digitalisierten Entität mitwirken können,
derart, daß der Herausgeber der digitalisierten Entität den Zufriedenheitsgrad der Kunden, insbesondere der potentiellen Kunden bestimmen kann.

7. Verfahren nach Anspruch 6, **dadurch gekennzeichnet, daß** es den Schritt des Bestimmens des Zufriedenheitsgrades der Benutzer umfaßt.

## Claims

1. A method creating a link between at least one user (1) and a publisher (2) of digital entities (in particular software, files, compact disks, video disks, etc. ...) that are reproducible by computer and/or electronic means; said digital entities being initially designed for use or execution solely on a single piece of user computer equipment;
said method comprising the following steps:
- a step (3) of subdividing said digital entity into two portions, a first portion and a second portion, neither of which portions can be run without the other;
- a step of storing said first portion in a memory zone (4a) of a server (4) connected to a computer network (5a, 5b) ;
- a step of transmitting said second portion to at least one user (1) having computer equipment (6) including computer means for implementing said second portion;
- a step of installing (6a) said second portion on said computer equipment (6);
- a step (7) of connecting said computer equipment to said computer network (5b); and
**characterized in that** it further includes
- a step of establishing (4d, 6b) a functional link between said first portion and said second portion;
whereby, when said second portion is put into operation, it automatically makes a connection via the computer network to said server in order to execute the said missing first portion as stored in said server.

2. A method according to claim 1, such that it further comprises:
- a step of exchanging information relating to said digital entity by means of said functional links;
whereby a community of users exchanging information is established.

3. A method according claim 1 or claim 2, such that it further comprises:
- a step of controlling (4e) access to said server;
whereby a user can access said first portion and use said digital entity only if the user possesses access rights.

4. A method according to claim 3, such that it further comprises:
- a step of controlling and limiting access to said server to a limited period of time and/or to a limited number of uses and/or to an approved population of users;
whereby the user can make use of such digital entity in full only during an evaluation stage and/or any stage agreed to with the publisher.

5. A method according to any one of claims 1 to 4, such that it further comprises:
- a step of identifying (4f) the user on making a connection to said server; and
- a step of storing (4g) identifiers specific to said user;
whereby the publisher of said digital entity can reference clients, in particular potential clients of said digital entity.

6. A method according to any one of claims 1 to 5, such that it further comprises:
- a step of analyzing (3a) events linked with using said digital entity, in particular the succession of events during installation, the frequency with which a function of said digital entity is used, the frequency with which said digital entity is used during an evaluation stage;
whereby the publisher has available a panel of users who can co-operate in testing the digital entity; and
whereby the publisher of said digital entity can determine the degree of client satisfaction, in particular of potential clients.

7. A method according to claim 6, such that it further comprises a step of determining a degree of satisfaction of users
